# EUROPEAN PATENT SPECIFICATION

(11) **EP 2 813 650 B1**
(45) Date of publication and mention of the grant of the patent: **13.03.2019**
(21) Application number: 13171908.0
(22) Date of filing: 13.06.2013
(51) Int. Cl.: E05B 65/00, E05B 67/38, F16B 31/02

(54) **LOCKING DEVICE FOR A GATE**
VERSCHLUSSVORRICHTUNG FÜR EIN GATE
DISPOSITIF DE VERROUILLAGE POUR UN PORTAIL

(43) Date of publication of application: 17.12.2014
(73) Proprietor: QR International AB, 451 55 Uddevalla (SE)
(72) Inventor: Mlinaric, Albert, SE-451 55 Uddevalla (SE)
(74) Representative: AWA Sweden AB

(56) References cited:
- FR-A3- 2 529 273
- GB-A- 2 210 124
- GB-A- 2 253 005
- US-A- 606 418
- US-A- 4 535 612
- US-A1- 2004 107 744

## Description

### FIELD OF THE INVENTION

The present invention relates to a locking device for a gate. Moreover, the present invention relates to a gate comprising a locking device.

### BACKGROUND OF THE INVENTION

In the field of gates and gateways, such as security gates, different locking devices are known. A locking device may be a mechanical or electronic fastening device that is released by a physical object, such as a key, or secret information, such as a password. Certain locking devices may also include a combination of a mechanical fastening device and an electronic fastening device. A locking device may have various designs, shapes, sizes and can be manufactured in different materials. Typically, a gate is provided with a locking device so as to secure the gate and to hinder unauthorized persons to pass through it. The gate can either be a single leaf gate or a double leaf gate.

For certain types of gates, e.g. gates at industry plants, prisons, car dealers, parking areas, authorities with high secrecy, it is particularly important that the locking of the gate is efficient and reliable. Locking devices suitable for installation in such applications must be impossible, or at least extremely time-consuming to force in order to guarantee a certain level of security. Unfortunately, many locking devices used today cannot withstand illegal entry and are therefore not sufficiently secure for their purpose.

One type of locking device is known from US 5 226 684. This type of locking device has a threaded U-bolt which is adapted to engage with a pair of threaded nuts so as to captivate a bracket to a gate post. In addition, the locking device includes a backup plate to ensure that the locking device can be properly arranged about the gate post.

Despite the activity in the field, exemplified by the above-cited disclosure, the locking devices in the prior art do not offer a satisfying level of security, and thus there is still a need in the art for a locking device which combines functionality and robustness with an improved security.

### SUMMARY OF THE INVENTION

It is an object of the present invention to at least partly overcome the problems in the prior art, and to provide a locking device being more time-consuming for an unauthorized person to break open and thus having an improved security level.

It is also an object of the present invention to provide a locking device which better meets the requirements of insurance companies and/or national regulations.

According to a first aspect of the present inventive concept, a locking device for a gate is provided. The locking device comprises a fitting having at least a first surface and a second surface, a locking member, and at least one fixating member comprising a head and a body being catenated by a bridging portion. The first surface and the second surface of the fitting are arranged opposite to each other. The fitting is provided with a first through hole arranged from the first surface to the second surface. The locking member comprises at least one threaded portion and a handle portion. The locking member is at least partially insertable into the first through hole from the second surface. The at least one fixating member is insertable into the first through hole from said first surface until the body is constrained by an abutment surface. The body is adapted to engage with said at least one threaded portion of the locking member such that the body is at least partially surrounded by the fitting in a circumferential direction of the body. When the body is engaged with the at least one threaded portion and constrained by the abutment surface, the head is removable from the body by shearing of the bridging portion.

By the principle of the present invention, it becomes possible to set the locking device in an irreversible locked configuration. More specifically, the irreversible locked configuration is obtained when the body is engaged with the at least one threaded portion and constrained by the abutment surface, and the head is removed from the body by shearing of the bridging portion. In other words, it should be readily understood that the irreversible locked configuration is obtained when the head is ultimately removed from the body by shearing of the bridging portion. In this manner, the efficient gripping surface of the fixating member is decreased to a minimum, i.e. the efficient gripping surface of the head is removed. Also, as the body of the fixating member is at least partially surrounded by the fitting in a circumferential direction of the body, while arranged in the locked configuration, it is nearly impossible for a tool to grip about the body. Thereby, it becomes extremely difficult for an unauthorized person to remove the fixating member and/or open the gate.

It is crucial that the fitting allows an abutment surface to be formed, or to be arranged. Besides that the abutment surface is arranged in the locking device to constrain further movement of the fixating member (the body of the fixating member), the abutment surface allows the body of the fixating member to be at least partly surrounded by the fitting, and thus less exposed to the environment and tools suitable for removing the fixating member.

Typically, at least a part of the fixating member is closely surrounded by the fitting in the circumferential direction of the fixating member, thereby exposing a minimal efficient gripping surface for a tool, e.g. a wrench, for removing the fixating member.

When the fixating member is constrained by the abutment surface, the abutment surface exerts a frictional force on the body of the fixating member.

There are several different possibilities to provide the locking device with an abutment surface. As an example, the size of the diameter of the first through hole can be varied over its length. In this manner, the difference in diameter between two sections of the through hole may give rise to the abutment surface. Typically, the diameter of the through hole is the largest at the first surface of the fitting, and the smallest at the second surface of the fitting. Typically, the abutment surface is formed closer to the second surface than to the first surface. The inner diameter of the abutment surface is typically equal to the diameter of the through hole at the second surface. The outer diameter of the abutment surface is larger than the inner diameter of the abutment surface, and smaller than or equal to the diameter of the through hole at the first surface.

In addition, or alternatively, the abutment surface may be formed by a separate piece arranged inside the first through hole. The separate piece may be e.g. a wedge or a taper sleeve.

Typically, the part of the body facing the abutment surface is the part of the body having the largest diameter.

When the body is engaged with the at least one threaded portion and constrained by the abutment surface, the bridging portion may be sheared when a sufficiently large torque is applied to the head relative to the body.

It should be readily appreciated that the body may be adapted to engage with the at least one threaded portion of the locking member by means of a corresponding threaded portion. Dependent on the shape of the at least one threaded portion of the locking member, the body may be provided by an inner threaded surface. Alternatively, the body may be provided by an outer threaded surface.

As mentioned above, the locking device is arranged in an irreversible locked configuration when the head is eventually removed from the body by shearing of the bridging portion. By the provision that the body is engaged with the at least one threaded portion and constrained by the abutment surface, it becomes possible to apply a sufficiently large torque to shear the bridging portion. Thus, when the body is engaged with the at least one threaded portion to final position, i.e. when the body is constrained by the abutment surface, the abutment surface allows the sufficiently large torque to shear the bridging portion when it is applied to the head relative to the body. Thereby, the locking device is arranged in a locked configuration. To this end, the body is extremely time-consuming to remove from the device since it is at least partially surrounded by the fitting in a circumferential direction of the body, while arranged in the locked configuration. There are several different possibilities for shearing the bridging portion, e.g. by a tool such as a wrench.

In the context of the present invention, the magnitude of the sufficiently large torque capable of shearing the bridging portion may depend on several factors, e.g. the material of which the head, body and bridging portion, respectively of the fixating member are made. Moreover, it may depend on the cross-sectional area between the body and the head, i.e. the area of the bridging portion. The torque needed to shear the bridging portion may also depend on e.g. the temperature of the fixating member.

Typically, the bridging portion is a portion of the at least one fixating member being weakened compared to the body and the head. The bridging portion may be weakened by means of a decrease in cross-sectional area compared to the cross-sectional area of the head and the body, respectively. In addition, or alternatively, it may be weakened by using a weaker material in the bridging portion than in the head and the body, relatively.

In an example embodiment, the locking device may comprise a first through hole having a length L₁₅ and a body having a length L₃₂, wherein the length L₁₅ is at least equal to the length L₃₂. In order to further improve the locking device, and to increase the time for breaking the locking device, or the gate, the major part of the body may be surrounded by the fitting in a circumferential direction, and in a height direction.

In an example embodiment, the locking device may comprise a first through hole having a length L₁₅, wherein the length L₁₅ comprises a partial length L₄₀ between the abutment surface 40 and the first surface 11, and wherein the partial length L₄₀ is at least equal to the length L₃₂. In order to even further improve the locking device, and to increase the time for breaking the locking device, or the gate, the body may be surrounded by the fitting in a circumferential direction, and in a height direction

Typically, the length L₁₅ of the first through hole is the length between the first surface and the second surface. The partial length L₄₀ is the length between the first surface and the abutment surface.

Typically, the length L₃₂ of the body is the length between the bottom surface of the body adapted to abut on the abutment surface and the top surface of the body being in contact with the bridging portion.

In an example embodiment, the fitting may be provided with a second through hole arranged from the first surface to the second surface of said fitting. The second through hole is spaced apart from the first through hole. The locking member is provided with an additional threaded portion, and the locking device further includes an additional fixating member.

The additional fixating member has a head and a body. The body is adapted to engage with the additional threaded portion. In this example embodiment, the second through hole comprises an additional abutment surface which is arranged to at least partly hold the additional fixating member and the additional threaded portion, such that the fixating member is at least partly surrounded by the fitting in the circumferential direction of the fixating member. It should be readily appreciated that the second through hole may have equal dimensions and effects according to any one of the aspects as mentioned above with respect to the first through hole.

A second through hole in the fitting allows for two fixating points for the locking device. More than one fixating point allows for increased stability as well as increased security as more than one fixating member has to be removed in order to destroy/remove the locking device.

In an example, more than two through holes may be available in the fitting. Typically, the number of through holes corresponds to the number of threaded portions as well as of the number of fixating members.

The through holes may be arranged symmetrically in the fitting. Alternatively, the through holes may be arranged asymmetrically in the fitting.

In an example embodiment, at least the first through hole may be arranged at right angles to the first surface of the fitting and the second surface of the fitting, respectively.

In another example embodiment, at least the first through hole may be arranged at an acute angle or at an obtuse angle to the first surface of the fitting and the second surface of the fitting, respectively.

In an example embodiment, the fixating member may be provided in the form of a shear nut. Alternatively, the fixating member may be provided in the form of a shear bolt.

A shear nut and a shear bolt, respectively, are well-known to the person skilled in the art. If the fixating member is a shear nut, it goes without saying that the body of the shear nut is provided with an inner threaded surface.

In an example embodiment, the locking member may further comprise a flange.

The flange may serve to increase the stability of the locking member.

The flange generally has a shape adapted to fit along a support member. The flange may e.g. be a metal sheet, or a piece of metal.

The flange may be integral with the locking member. Alternatively, the flange may be a separate piece, e.g. a washer, which engages with the locking member.

In a locking member comprising a single threaded portion, a flange is typically arranged such that it at least partly surrounds a support member.

In a locking member comprising two or more threaded portions arranged in a through hole of a fitting each, the handle portion is typically non-rotatable about its axis.

In an example embodiment, the handle portion may be non-rotatable about its axis.

The handle portion of the locking member is aimed to stay in a fixed position. For instance, a flange may be used to keep the handle portion in a fixed position.

In an example embodiment, the handle portion may be adapted to hold a padlock.

Typically, the handle portion is adapted to hold a padlock, which may fasten a locking device to another locking device, or alternatively to a loop or an eye e.g. supported by a gatepost or a gate.

Typically, the handle portion has a closed circumference, such that a padlock may not be removed from the locking device unless at least one of the padlock and the locking device is unlocked or demolished.

Typically, the padlock is made of toughened steel.

In an example embodiment, the locking device may further comprise a padlock.

In an example embodiment, the fitting may be an integral part of one of a gatepost and a gate.

The fitting may constitute an integrated part of a gatepost or a gate. The fitting may also be a permanent part of a gatepost or a gate.

Typically, the fitting has a shape adapted to fit with the gatepost or the gate.

In an example embodiment, the threaded portion and the handle portion may be catenated by a linking portion.

The linking portion may be designed in different ways. Typically, the linking portion is made of the same material as the threaded portion. Optionally, the linking portion is also made of the same material as the handle portion.

In an example embodiment, the threaded portion may have a threaded outer surface.

In this context of the present invention, a threaded portion having a threaded outer surface is adapted to engage with a shear nut.

In an example embodiment, the threaded portion may be cylindrical and may have a threaded inner surface.

A threaded portion having a threaded inner surface is adapted to engage with a shear bolt.

In an example embodiment, the locking device may further comprise a support member. In this context of the present invention, the handle portion is adapted to be arranged on a first side of said support member, and the fitting is adapted to be arranged on a second side of said support member. The first side is arranged opposite to the second side.

In an example embodiment, the support member may be one of a gatepost and a gate.

The locking device may be arranged on a support member being a part of a gate construction, e.g. a gatepost or a gate.

Generally, the support member comprises at least a through hole into which the locking member may be at least partially inserted. Typically, the locking member is insertable into the at least one through hole from the first side of the support member.

The support member has a thickness, which the linking portion of the locking member may bridge by having a length corresponding to at least the thickness of the support member.

Optionally, although not strictly required, at least the fitting and the locking member are made of toughened steel. In this manner, the strength of the locking device is further improved.

Toughened steel is a preferred material, since the invention aims to at least partly overcome the problems of unsecure locking devices, and to provide a locking device fulfilling the highest requirements for security.

According to a second aspect of the present inventive concept, there is provided a gate comprising a looking device according to any one of the features and/or aspects as mentioned above.

By the term "adapted to engage with" is herein meant that a component is adapted to functionally interact with another component. For example, a screw is adapted to engage with a nut, or a bolt may be adapted to engage with an internally threaded cylinder.

By the term "efficient gripping surface" is herein meant the surface available for e.g. a human hand or a convenient tool, such as a wrench, to successfully grip the object comprising the efficient gripping surface. By the term "locked configuration" is herein meant the configuration in which the locking device according to embodiments of the present invention is irreversibly arranged when a sufficiently large torque has been applied to the head relative to the body of the fixating member thereby shearing the bridging portion such as the head is removed from the body. In the locked configuration, the body is engaged with the at least one threaded portion and constrained by the abutment surface. Thus, in the locked configuration, the head is removed from the body. In the locked configuration the locking device is substantially fixed in the axial direction of the through hole(s) of the fitting.

By the term "open configuration" is herein meant the configuration in which the locking device according to embodiments of the present invention is reversibly arranged, from that the fixating member has been arranged to engage with the locking member until that the body has been constrained by the abutment surface and a sufficiently large torque has been applied to the head relative to the body of the fixating member thereby shearing the bridging portion. Thus, in the open configuration, the head and the body are catenated by the bridging portion.

Further features of, and advantages with, the present invention will become apparent when studying the appended claims and the following description. The skilled addressee realize that different features of the present invention may be combined to create embodiments other than those described in the following, without departing from the scope of the present invention.

### BRIEF DESCRIPTION OF THE DRAWINGS

These and other aspects of the present invention will now be described in more detail, with reference to the appended drawings showing embodiment(s) of the invention.
Fig. 1a schematically illustrates a cross-sectional side view of a locking device according to an example embodiment of the present inventive concept;
Fig. 1b schematically illustrates a cross-sectional top view of the locking device shown in Fig. 1a;
Fig. 2a schematically illustrates a cross-sectional side view of a locking device according to another example embodiment of the present inventive concept;
Fig. 2b schematically illustrates a cross-sectional side view of a locking device according to yet another example embodiment of the present inventive concept;
Figs. 3a to 3c schematically illustrate cross-sectional side views of engagements between a fixating member and a locking member inside a through hole of a fitting according to various example embodiments of the present inventive concept, wherein the fixating member is a shear nut arranged in an open configuration;
Fig. 4 schematically illustrates a cross-sectional side view of a fixating member in an open configuration according to an embodiment of the present inventive concept, wherein the fixating member is a shear bolt;
Fig. 5 is a perspective view of the locking device shown in Fig. 1a, which illustrates an abutment surface of the locking device;
Figs. 6a and 6b schematically illustrate locking devices according to various example embodiments of the present inventive concept arranged on support members, i.e. gates and a gatepost, respectively, and a gate according to an example embodiment of the present inventive concept.

As illustrated in the figures, the sizes of layers and regions are exaggerated for illustrative purposes and, thus, are provided to illustrate the general structures of embodiments of the present invention. Like reference numerals refer to like elements throughout.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

The present invention relates to a locking device for a gate comprising a fitting, a locking member, and at least one fixating member. As will be evident from the description hereinafter, the locking device is capable of being arranged in a locked configuration, thereby having the advantage of being more time-consuming to break open, and thus more secure, than the locking devices shown in the prior art.

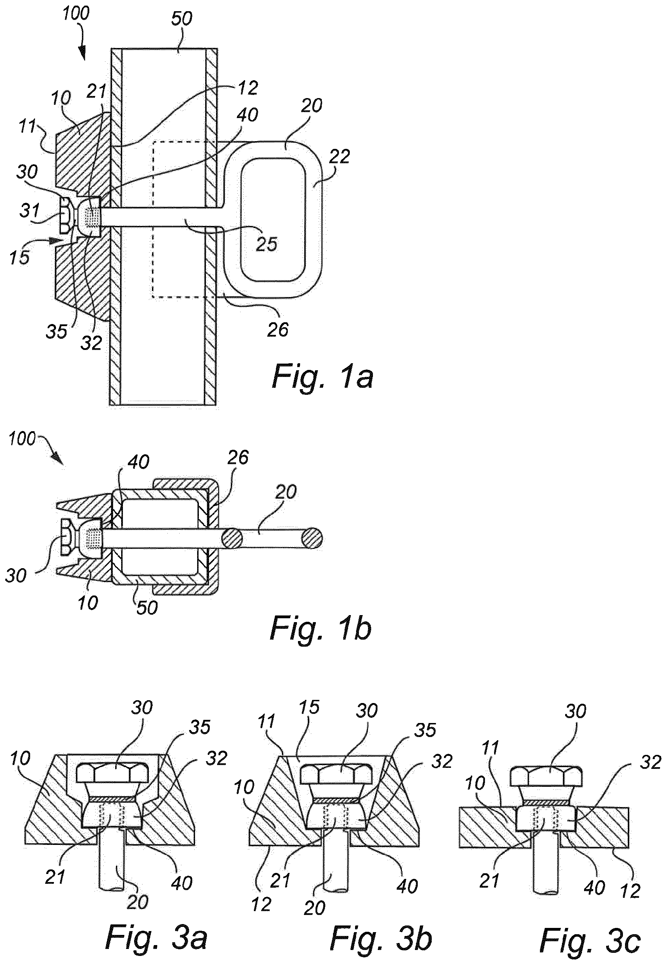

Referring now to the figures and Figs. 1a and 1b in particular, there is depicted a locking device 100 according to an example embodiment of the present invention. The locking device 100 comprises a fitting 10, a locking member 20, a fixating member 30, an abutment surface 40. Typically, the locking device is arranged about a support member 50, e.g. a gate post or gate. The locking member 20 here also includes a flange 26, but this is however not strictly necessarily.

It should be readily appreciated that in the description hereinafter, a dimension of a component or a relationship between two components may be definable by a reference to a cylindrical coordination system (r, ϕ, z) having an origin defined by a point located along the central axis of a component, wherein r is the radial distance from the central axis, ϕ is the circumference (i.e. the angular position about the central axis), and z is the height (or length) of the component along the central axis. As an example, the fixating member has an extension in the radial direction, an extension in the circumference direction and an extension in the length direction. Analogously, the through hole has an extension in the radial direction, an extension in the circumference direction and an extension in the length direction.

Fig. 1a shows a side-view of the locking device 100. The fitting 10 and the support member 50 are shown in a vertical cross-section. In other words, the locking device 100 is shown in an up-right position arranged about the support member 50. This position of the locking device corresponds to the position of the locking device during use.

Fig. 1b shows a top view of the locking device 100. In this figure, the fitting 10, the flange 26 and the support member 50 are shown in a horizontal cross-section.

The fitting 10 is provided with a first surface 11 and a second surface 12. The first surface 10 is arranged opposite to the second surface 12. A first through hole 15 is arranged from the first surface 11 to the second surface 12. In Figs. 1a and in Fig 1b, the first through hole 15 is arranged symmetrically in the fitting. However, it should be readily appreciated that the first through hole 15 can be arranged asymmetrically in the fitting.

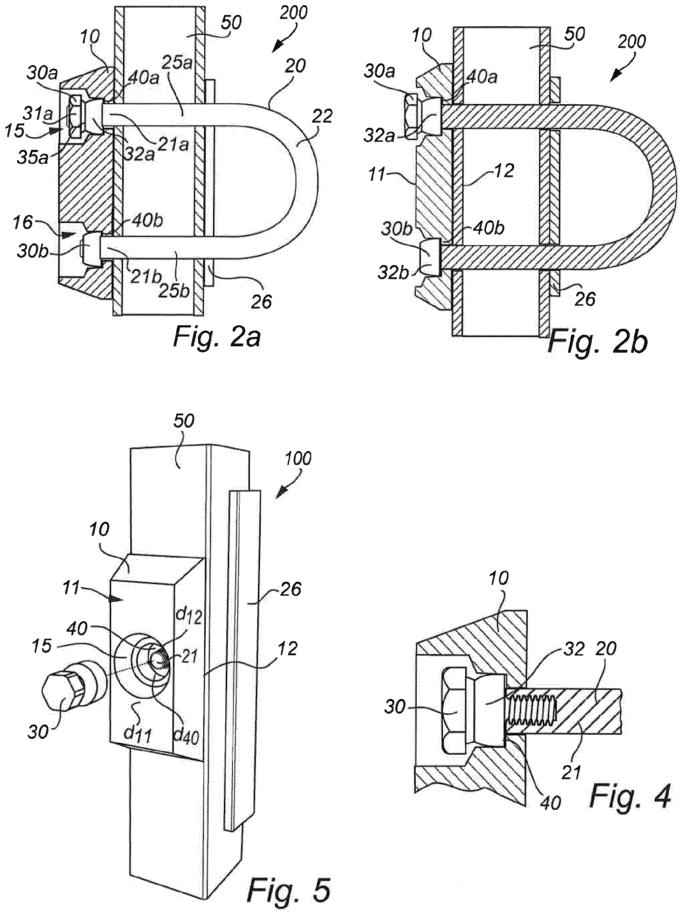

In Figs. 1a and 1b, the diameter of the first through hole 15 varies over its length. The diameter of the first through hole 15 is the largest at the first surface 11, and the smallest at the second surface 12. An abutment surface 40 here is formed inside the through hole due to the varying diameter. More specifically, the abutment surface is formed by a difference in the radial distance between an outer diameter d40 and an inner diameter d12, as is illustrated in Fig. 5. As may be gleaned from Figs 1a and 1b, the abutment surface 40 here is formed closer to the second surface 12 than to the first surface 11 (as seen in the axial length of the first through hole 15).

The thickness of the part of the fitting 10 as defined by the distance between the abutment surface 40 and the second surface 12 of the fitting should be sufficiently thick to manage to keep the locking device in a locked configuration during a relatively long time. In this context of the present invention, the thickness is typically within the range of from 2 mm to 30 mm, and more typically, within the range of from 5 mm to 20 mm.

In Figs. 1a and 1b, the locking member 20 here is an integral piece comprising a circular handle portion 22, a threaded portion 21, a linking portion 25, and a flange 26, respectively.

The locking member 20 is insertable from the second surface 12 of the fitting 10. In Figs. 1a and 1b, the threaded portion 21 is inserted from the second surface 12, and thus at least partly arranged inside the first through hole 15 of the fitting 10. To this end, at least part of the threaded portion 21 is arranged inside the first through hole 15.

Typically, the threaded portion 21 is arranged at an end portion of the locking member 20. In particular, the threaded portion 21 may be arranged at a protruding end portion of the locking member 20, such as shown in Figs. 1a and 1b.

Typically, but not strictly necessarily, the handle portion 22 and the flange 26 here serves as a bucker in a way such that the locking member 20 stays in place at least partly inside the first through hole 15 of the fitting 10. Typically, the flange 26 abuts on a support member 50 such as shown in Fig. 1b, so as to counteract the force acting on the locking member 20 when the fixating member 30 is to be screwed on the at least one threaded 21.

Typically, but not strictly necessarily, at least one of the handle portion 22 and the flange 26 here is arranged in a way ensuring that the handle portion is non-rotatable around its own axis.

The handle portion 22 may be designed in many different ways. For example, the handle portion 22 may have a partly circular shape. Fig. 1a shows a handle portion 22 which comprises a circular portion. Typically, the handle portion 22 has a closed circumference, thereby being able to hold an additional locking device (although not shown in Figs. 1a and 1b), e.g. a padlock.

The handle portion 22 may further be arranged in different ways. Generally, the handle portion is arranged straightly through the fitting 10 as shown in Fig. 1a and 1b.

Alternatively, the handle portion 22 may be arranged with an inclination to the second surface of the fitting 10, i.e. in an angle to the fitting 10, which may be advantageous if the handle is larger than the space available at the site of arrangement of the locking device 100.

As shown in Fig. 1a, the linking portion 25 typically has a length approximately corresponding to the width of the support member 50. In other words, the linking portion 25 typically has a length approximately corresponding to the width of the support member 50 as seen in the axial direction of the first through hole 15.

As mentioned above, the locking device 100 comprises at least one fixating member 30 including a head 31 and a body 32 being catenated by a bridging portion 35. The fixating member 30 is being insertable into the first through hole 15 from the first surface 11 until the body 32 is constrained by an abutment surface 40.

In Figs. 1a and 1b, the fixating member 30 is a shear nut comprising a head 31 and a body 32 being catenated by a frangible bridging portion 35. The fixating member 30 is insertable from the first surface 11 of the fitting 10. In. Figs. 1a and 1b, the fixating member 30 is inserted, and the body 32 of the shear nut engages with the screwlike threaded portion 21. The threaded portion 21 is a threaded outer surface of one end portion of the locking member 20. In this manner, the body becomes at least partially surrounded by the fitting 10 in a circumferential direction of the body, as seen in the axial direction of the fixating member (which typically correspond to the axial direction of the first through hole 15).

In various example embodiments, where the fixating member 30 is a shear nut, the body 32 and the threaded portion 21 typically engage in such a way that the threaded portion 21 becomes at least partly surrounded by said body 32. The head 31 has an efficient gripping surface which may be gripped by e.g. a wrench. The body 32 has preferably no efficient gripping surface. If the body 32 is provided with an efficient gripping surface, it is effectively surrounded by the fitting in a circumferential direction of the body.

The fixating member 30 is arranged with the body 32 facing the abutment surface 40. The diameter of the part of the body 32 being the most adjacent part relative to the abutment surface is approximately equal to the outer diameter of the abutment surface. Thus, the body 32 is tightly surrounded by the fitting in the circumferential direction of the body 32.

In Figs. 1a and 1b, the fixating member 30 is arranged in an open configuration, wherein the head has its efficient gripping surface exposed.

The abutment surface 40 here serves to ensure that the fixating member 30 stays at least partially inside the first through hole 15, enabling the body 32 to engage with the threaded portion 21. In other words, the primary function of the abutment surface is to constrain further movement of the fixating member (the body of the fixating member). As mentioned above, the abutment surface 40 is typically formed by a difference in diameter of the first through hole 15, as seen in the radial direction of the first through hole 15, which is clearly illustrated in Figs. 1a and 1b or Fig. 5. When the fixating member is constrained by the abutment surface, the abutment surface exerts a frictional force on the body.

Although not strictly required, the abutment surface 40 is arranged such that the body 32 is entirely surrounded by the fitting 10 in a circumferential direction. In other embodiments, the abutment surface 40 is arranged such that the fixating member 30 is entirely surrounded by the fitting in a circumferential direction, as is shown in e.g. Fig. 5.

The abutment surface 40 here serves to ensure that the frangible bridging portion 35 can be sheared when a sufficiently large torque is applied to the head 31 relative to the body 32, as the abutment surface 40 exert a frictional force on the body 32.

The cross-sectional area between the body 32 and the head 31, i.e. the area of the bridging portion 35, is the fracture area when a sufficiently large torque is applied to the head relative to the body. In this manner, the head 31 is removed from the body 32 by shearing of said bridging portion 35.

Accordingly, when the body 32 is engaged with said at least one threaded portion 21 and constrained by the abutment surface 40, the head 31 is removable from said body 32 by shearing of said bridging portion 35. Thanks to present invention, as mentioned above, it becomes possible to set the locking device in an irreversible locked configuration. More specifically, the irreversible locked configuration is obtained when the body 32 is engaged with the at least one threaded portion 21 and constrained by the abutment surface 40, and the head 31 is removed from the body 32 by shearing of the bridging portion 35. In other words, it should be readily understood that the irreversible locked configuration is obtained when the head is ultimately removed from the body by shearing of the bridging portion. In this manner, the efficient gripping surface of the fixating member is decreased to a minimum, i.e. the efficient gripping surface of the head is removed. Thereby, it becomes extremely difficult for an unauthorized person to remove the fixating member and/or open the gate.

Generally, the locking device 100 is arranged at, or in connection with, a support member 50 having at least a first side and a second side, as seen in the axial direction of the through hole. The first side is arranged opposite to the second side. The first side of the support member 50 is facing the fitting 10, while the second side is facing the handle portion 20 (or the flange). The support member may be e.g. a gatepost or a gate.

In Figs. 1a and 1b, the flange 26 is arranged on the first side of the support member 50, and the fitting 10 is arranged on the second side of the support member 50. The linking portion 25 is arranged through the support member 50, from the first side to the second side.

The through hole of the support member 50 has a diameter at least corresponding to the diameter of the linking portion 25 allowing the locking member 20 to be inserted into the support member 50 from the first side of the support member. Typically, the length of the linking portion 25 corresponds to at least the thickness of the support member 50.

In Figs. 2a and 2b, a locking device 200 according to another example embodiment of the present invention is depicted. The locking device 200 here comprises a fitting 10, a locking member 20, two fixating members 30a, 30b, and two abutment surfaces 40a, 40b. Moreover, the locking member 20 here includes a flange 26. Fig. 2a is a side view, wherein the fitting 10 is shown in cross-section. Fig. 2b is a side view, wherein the fitting 10 and the locking member 20 including the flange 26 are shown in cross-section.

The fitting 10 in Figs. 2a and 2b is similar to the fitting shown in Figs. 1a and 1b. However, the fitting 10 in Figs. 2a and 2b also comprises a second through hole 16 in addition to the first through hole 15. The through holes of the fitting are similar to each other in terms of size, extension and shape. It should be readily appreciated that the fitting may comprise additional through holes as well.

Consequently, the locking device 200 here comprises two abutment surfaces 40a, 40b, one in each of the through holes 15, 16. The abutment surfaces 40a, 40b shown in Figs. 2a and 2b have the same functionality as the abutment surface 40 shown in Figs. 1a and 1b.

The locking member 20 is U-shaped and formed as an integral part. The locking member 20 comprises two threaded portions 21a, 21b and a handle portion 22 being catenated with the threaded portions by two linking portions 25a, 25b. The threaded portions 21a, 21b are screwlike end portions each having a threaded outer surface.

Analogous to the locking device as shown in figs. 1a and 1h, the locking member 20 here further comprises a flange 26 serving as a dolly/bucker, typically against the support member 50, such that the locking member 20 stays in place at least partly inside the through holes 15, 16. The flange 26 should b adapted to fit the contour of the support member 50. In Figs. 2a and 2b, the flange 26 is arranged such that is it closes the circular portion of the locking member 20, thereby forming a handle portion 22 with a closed circumference.

Alternatively, the locking member 20 may be provided in the form of a two-parted piece, wherein the handle portion, the two linking portions and the two threaded portions formed an integral piece, while the flange is an independent part either arranged adjacent to, in connection with or welded together with the integral part. For example, the flange may be a washer.

In Figs. 2a and 2b, the locking member 20 is inserted into the fitting, and the threaded portions 21a, 21b are arranged inside one of the through holes 15, 16 each.

In Figs. 2a and 2b, the first fixating member 30a being a shear nut is arranged in an open configuration, and comprises a head 31a and a body 32a being catenated by a bridging portion 35a. The bridging portion 35a here is typically made frangible. The second fixating member 30b also being a shear nut is arranged in a locked configuration, and comprises only a body 32b. Analogously to the embodiment as shown in figs. 1a and 1b, the locked configuration is obtained when the body 32b is engaged with the at least one threaded portion 21b and constrained by the abutment surface 40. As mentioned above, the head is removable from the body 32b by shearing of the bridging portion. Thus, the head of the fixating member 30b has been removed from the body 32b.

In the locked configuration, the frangible bridging portion has been sheared when a sufficiently large torque was applied to the head relative to the body 32b of the second fixating member 30b such that the head 31 dislodges from the body 32.

The present invention is therefore superior over prior art devices since the head can be detached from the body. Hereby, due to the construction of the fitting and the first through hole, no efficient gripping surface of the fixating member is available, while the body becomes extremely troublesome to remove from the locking device.

In the embodiment shown in Fig. 2a, the length of the first fixating member 30a is approximately equal to the distance between the abutment surface 40 and the first surface 11, which enables the first fixating member 30a to be entirely surrounded by the fitting 10 in the circumferential direction of the fixating member.

In the embodiment shown in Fig. 2b, the length of the body 32a, 32b is approximately equal to the distance between the abutment surface 40 and the first surface 11, which enables the body 32a, 32b to be entirely surrounded by the fitting 10 in the circumferential direction of the body.

The locking device 200 is adapted to fit with the support member 50, as described in Figs. 1a and 1b. A support member for the locking device in Figs. 2a and 2b comprises two through holes, one for each threaded portion.

Figs. 3a, 3b and 3c are side views showing enlargements of a part of a locking device in an open configuration. More specifically, Figs. 3a, 3b and 3c illustrate the engagement between a body 32 of a fixating member 30 and a threaded portion 21 of a locking member 20 inside a through hole of a fitting 10. The fitting 10 is shown in cross-section.

In Figs. 3a-c, the fixating member 30 is a shear nut, and the threaded portion 21 is screwlike having a threaded outer surface adapted to engage with the shear nut.

In all of the Figs. 3a-3c, the through hole of the fitting has a diameter that varies over the length of the fitting.

In Figs. 3a and 3b, the fitting 10 surrounds the entire fixating member in the circumferential direction of the fixating member. In Fig. 3c, the fitting surrounds the body of the fixating member in the circumferential direction of the body 32.

In Fig. 3a, the diameter varies in two steps. Further, steps may be present in other examples. The parts of the through hole, divided by each step, have either a conical shape or a cylindrical shape.

In Fig. 3b, the diameter varies in one step. In addition, the diameter is gradually varied between the abutment surface 40 and the first surface 11. The part of the through hole between the abutment surface 40 and the first surface 11 has a conical shape, and the part of the through hole between the abutment surface 40 and the second surface 12 has a cylindrical shape.

In Fig. 3c, the diameter varies in one step. Both the part of the through hole between the abutment surface 40 and the first surface 11, and the part of the through hole between the abutment surface 40 and the second surface 12 have a cylindrical shape.

Fig. 4 is a side view showing an enlargement of a part of a locking device. In this figure, the fixating member 30 is a shear bolt. In addition, the threaded portion is cylindrical having a threaded inner surface adapted to engage with the shear bolt. Fig. 4 further shows the engagement between the fixating member 30 and the threaded portion 21 of the locking member 20 inside a through hole of a fitting 10.

The body 32 of the shear bolt and the threaded portion 21 engages such that the body becomes at least partly surrounded by the threaded portion 21. Typically, the part of the body of the shear bolt facing the abutment surface 40 is the part of the body having the largest diameter enabling the fitting to tightly surround the shear bolt, as shown in Fig. 4.

Fig. 5 shows an exploded view of a locking device 100 as shown in Fig. 1a-b.

In Fig. 5, the diameter d11 of the through hole 15 on the first surface 11, the diameter d12 of the same through hole but on the second surface 12, and the outer diameter d40 of the abutment surface 40 are shown in relation to each other.

Typically, the largest outer diameter of the body 32 of the fixating member 30 is approximately equal to the outer diameter d40 of the abutment surface 40.

The relationship between the diameters follows the equation: d11 ≥ d40 > d12.

The diameter d12 of the through hole at the second surface 12 is typically within the range of from 5 mm to 25 mm, such as from 10 mm to 20 mm, e.g. 17 mm.

In Fig. 5, the through hole 15 is arranged symmetrically in the fitting. In an alternative example, the through hole may be arranged asymmetrically, such as closer to one of the borders of the fitting.

In Fig. 5, the through hole 15 is arranged perpendicular to the first surface and the second surface, respectively. In an alternative example, the through hole may be arranged non-perpendicularly to the first surface and the second surface of the fitting.

Fig. 5 also shows the flange 26 being arranged on the opposite side of the support member 50 relative to the fitting 10. Besides the flange 26, only the end portion of the threaded portion 21 of the locking member is shown. The threaded portion 21 is adapted to engage with the fixating member 30 inside the through hole 15.

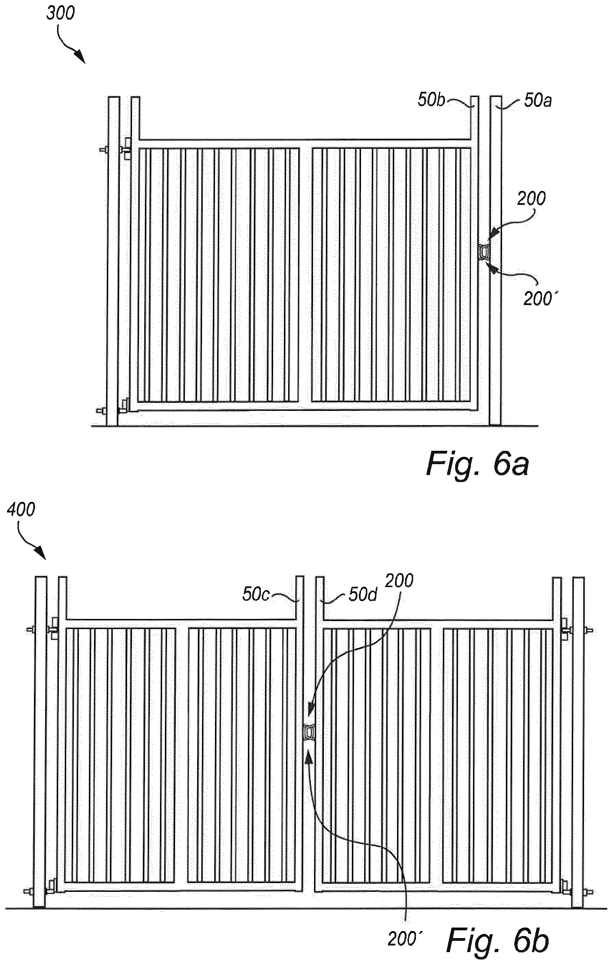

Figs. 6a-b show a support member being at least one of a gatepost and a gate, comprising a locking device 200 as shown in Fig. 2a-b.

Fig. 6a shows a first locking device 200 being arranged at a gatepost 50a, and a second locking device 200' being arranged at a part of a gate 50b. The locking devices 200, 200' are arranged at the same height over the ground, thereby enabling an additional lock, such as a padlock, to be arranged at the handle portions of the locking devices to interconnect them. In an alternative example (not shown), a locking device may be arranged at a part of a gate, and then being interconnected to a loop or an eye, e.g. an eyebolt, being fixed in a structure or a construction in the surrounding, e.g. a gatepost, by an additional lock.

Fig. 6b shows a first locking device 200 being arranged at a part of a gate 50c, and a second locking device 200' being arranged at a part of another gate 50d. The handle portions of the locking devices 200, 200' may be interconnected by an additional lock, such as a padlock.
In an alternative example (not shown), the handle portions of the locking devices 200, 200' may be angled e.g. due to a limited space available for arranging the handle portions between the gates.

Thanks to the present invention, there is provided a locking device which is more time-consuming for an unauthorized person to break open. The locking device has therefore an improved security level. To this end, the locking device better meets the requirements of insurance companies and/or national regulations.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A locking device (100, 200) for a gate comprising:
- a fitting (10) having at least a first surface (11) and a second surface (12), said first surface (11) and said second surface (12) being arranged opposite to each other, said fitting (10) is provided with a first through hole (15) arranged from said first surface (11) to said second surface (12); and
- a locking member (20) comprising at least one threaded portion (21, 21a, 21b) and a handle portion (22), said locking member (20) being at least partially insertable into said first through hole (15) from said second surface (12);
- at least one fixating member (30, 30a, 30b) comprising a head (31, 31a) and a body (32, 32a, 32b) being catenated by a bridging portion (35, 35a), said at least one fixating member (30, 30a, 30b) being insertable into said first through hole (15) from said first surface (11) until said body (32, 32a, 32b) is constrained by an abutment surface (40);
wherein said body (32, 32a, 32b) is adapted to engage with said at least one threaded portion (21, 21a, 21b) such that said body (32, 32a, 32b) is at least partially surrounded by said fitting (10) in a circumferential direction of said body (32, 32a, 32b);
wherein, when said body (32, 32a, 32b) is engaged with said at least one threaded portion (21, 21a, 21b) and constrained by the abutment surface (40), said head (31, 31a) is removable from said body (32, 32a, 32b) by shearing of said bridging portion (35, 35a).

2. A locking device (200) according to claim 1, wherein the fitting (10) is provided with a second through hole (16) arranged from said first surface (11) to said second surface (12) of said fitting (10), the second through hole (16) is spaced apart from the first through hole (15), the locking member (20) is provided with an additional threaded portion (21b), and the locking device (200) further includes an additional fixating member (30b).

3. A locking device (100, 200) according to any one of the preceding claims, wherein the fixating member (30, 30a, 30b) is provided in the form of a shear nut or a shear bolt.

4. A locking device (100, 200) according to any one of the preceding claims, wherein said locking member (20) further comprises a flange (26).

5. A locking device (100, 200) according to any one of the preceding claims, wherein the handle portion (22) is non-rotatable about its own axis.

6. A locking device (100, 200) according to any one of the preceding claims, wherein said handle portion (22) is adapted to hold a padlock.

7. A locking device (100, 200) according to any one of the preceding claims, further comprising a padlock.

8. A locking device (100, 200) according to any one of the preceding claims, wherein said fitting is an integral part of one of a gatepost and a gate.

9. A locking device (100, 200) according to any one of the preceding claims, wherein said threaded portion (21, 21a, 21b) and said handle portion (22) are catenated by a linking portion (25, 25a, 25b).

10. A locking device (100, 200) according to any one of the preceding claims, wherein said threaded portion (21, 21a, 21b) has a threaded outer surface.

11. A locking device (100, 200) according to any one of the preceding claims, wherein said threaded portion (21, 21a, 21b) is cylindrical and has a threaded inner surface.

12. A locking device (100, 200) according to any one of the preceding claims, further comprising a support member (50), said handle portion (22) being adapted to be arranged on a first side of said support member (50), and said fitting (10) being adapted to be arranged on a second side of said support member, said first side being arranged opposite to said second side.

13. A locking device (100, 200) according to claim 12, wherein said support member (50) is one of a gatepost (50a) and a gate (50b, 50c, 50d).

14. A locking device (100, 200) according to any one of the preceding claims, wherein at least the fitting (10) and the locking member (20) are made of toughened steel.

15. A gate (50b, 50c, 50d) comprising a locking device (100, 200) according to any of the preceding claims.

## Patentansprüche

1. Verriegelungsvorrichtung (100, 200) für ein Tor, umfassend:
- ein Fitting (10) mit mindestens einer ersten Fläche (11) und einer zweiten Fläche (12), wobei die erste Fläche (11) und die zweite Fläche (12) entgegengesetzt zueinander angeordnet sind, das Fitting (10) mit einem ersten Durchgangsloch (15) versehen ist, das von der ersten Fläche (11) zu der zweiten Fläche (12) angeordnet ist ; und
- ein Verriegelungselement (20), das mindestens einen gewindetragenden Teil (21, 21a, 21b) und einen Griffteil (22) umfasst, wobei das Verriegelungselement (20) mindestens teilweise in das erste Durchgangsloch (15) von der zweiten Fläche (12) aus eingesetzt werden kann;
- mindestens ein Befestigungselement (30, 30a, 30b), das einen Kopf (31, 31a) und einen Körper (32, 32a, 32b) umfasst, die durch einen Überbrückungsteil (35, 35a) verbunden sind, wobei mindestens ein Befestigungselement (30, 30a, 30b) in das erste Durchgangsloch (15) von der ersten Fläche (11) aus eingeführt werden kann, bis der Körper (32, 32a, 32b) durch eine Anschlagfläche (40) angehalten wird;
wobei der Körper (32, 32a, 32b) angepasst ist, mit dem mindestens einen gewindetragenden Teil (21, 21a, 21b) so in Eingriff zu treten, dass der Körper (32, 32a, 32b) mindestens teilweise von dem Fitting (10) in einer Umfangsrichtung des Körpers (32, 32a, 32b) umgeben ist;
wobei, wenn der Körper (32, 32a, 32b) mit dem mindestens einen gewindetragenden Teil (21, 21a, 21b) in Eingriff steht und von der Anschlagfläche (40) angehalten wird, der Kopf (31, 31a) durch Scheren des Überbrückungsteils (35, 35a) aus dem Körper (32, 32a, 32b) entfernt werden kann.

2. Verriegelungsvorrichtung (200) nach Anspruch 1, wobei das Fitting (10) mit einem zweiten Durchgangsloch (16) versehen ist, das von der ersten Fläche (11) zu der zweiten Fläche (12) des Fittings (10) geht, das zweite Durchgangsloch (16) von dem ersten Durchgangsloch (15) beabstandet ist, das Verriegelungselement (20) mit einem zusätzlichen gewindetragenden Teil (21b) versehen ist, und die Verriegelungsvorrichtung (200) ferner ein zusätzliches Befestigungselement (30b) einschließt.

3. Verriegelungsvorrichtung (100, 200) nach einem der vorstehenden Ansprüche, wobei das Befestigungselement (30, 30a, 30b) in Form einer Schermutter oder eines Scherbolzens vorgesehen ist.

4. Verriegelungsvorrichtung (100, 200) nach einem der vorstehenden Ansprüche, wobei das Verriegelungselement (20) ferner einen Flansch (26) umfasst.

5. Verriegelungsvorrichtung (100, 200) nach einem der vorstehenden Ansprüche, wobei der Griffteil (22) um seine Achse nicht rotierbar ist.

6. Verriegelungsvorrichtung (100, 200) nach einem der vorstehenden Ansprüche, wobei der Griffteil (22) angepasst ist, ein Vorhängeschloss zu halten.

7. Verriegelungsvorrichtung (100, 200) nach einem der vorstehenden Ansprüche, ferner umfassend ein Vorhängeschloss.

8. Verriegelungsvorrichtung (100, 200) nach einem der vorstehenden Ansprüche, wobei das Fitting ein fester Bestandteil eines Torpfostens und eines Tors ist.

9. Verriegelungsvorrichtung (100, 200) nach einem der vorstehenden Ansprüche, wobei der gewindetragende Teil (21, 21a, 21b) und der Griffteil (22) durch ein Verbindungsteil (25, 25a, 25b) miteinander verbunden sind.

10. Verriegelungsvorrichtung (100, 200) nach einem der vorstehenden Ansprüche, wobei der gewindetragende Teil (21, 21a, 21b) eine gewindetragende Außenfläche hat.

11. Verriegelungsvorrichtung (100, 200) nach einem der vorstehenden Ansprüche, wobei der gewindetragende Teil (21, 21a, 21b) zylindrisch ist und eine gewindetragende Innenfläche aufweist.

12. Verriegelungsvorrichtung (100, 200) nach einem der vorstehenden Ansprüche, ferner umfassend ein Trägerelement (50), wobei der Griffteil (22) angepasst ist, auf einer ersten Seite des Trägerelements (50) angeordnet zu sein, und das Fitting (10) angepasst ist, auf einer zweiten Seite des Trägerelements angeordnet zu sein, wobei die erste Seite entgegengesetzt zu der zweiten Seite angeordnet ist.

13. Verriegelungsvorrichtung (100, 200) nach Anspruch 12, wobei das Trägerelement (50) ein Trägerelement eines Torpfostens (50a) und eines Tors (50b, 50c, 50d) ist.

14. Verriegelungsvorrichtung (100, 200) nach einem der vorstehenden Ansprüche, wobei mindestens das Fitting (10) und das Verriegelungselement (20) aus gehärtetem Stahl hergestellt sind.

15. Tor (50b, 50c, 50d), umfassend eine Verriegelungsvorrichtung (100, 200) nach einem der vorstehenden Ansprüche.

## Revendications

1. Dispositif de verrouillage (100,200) pour portail, comprenant :
- un raccord (10) doté d'au moins une première surface (11) et une seconde surface (12), ladite première surface (11) et ladite seconde surface (12) étant disposées mutuellement opposées, ledit raccord (10) étant pourvu d'un premier trou traversant (15) pratiqué depuis ladite première surface (11) jusqu'à ladite seconde surface (12) ; et
- un élément de verrouillage (20) comprenant au moins une section filetée (21, 21a, 21b) et une section de poignée (22), ledit élément de verrouillage (20) étant au moins partiellement insérable dans ledit premier trou traversant (15) depuis ladite seconde surface (12) ;
- au moins un élément de fixation (30,30a,30b) comprenant une tête (31, 31a) et un corps (32, 32a, 32b) qui sont enchaînés par une section de montage (35, 35a), ledit au moins un élément de fixation (30, 30a, 30b) étant insérable dans ledit premier trou traversant (15) depuis ladite première surface (11) jusqu'à ce que ledit corps (32, 32a, 32b) soit contraint par une surface de butée (40) ;
ledit corps (32, 32a, 32b) étant apte à s'engager dans ladite au moins une section filetée (21, 21a, 21b) de manière à ce que ledit corps (32, 32a, 32b) soit entouré au moins partiellement par ledit raccord (10) dans un sens circonférentiel dudit corps (32, 32a, 32b) ;
sachant que, lorsque ledit corps (32, 32a, 32b) est engagé dans ladite au moins une section filetée (21, 21a, 21b) et contraint par la surface de butée (40), ladite tête (31, 31a) peut être retirée dudit corps (32, 32a, 32b) par cisaillage de ladite section de pontage (35, 35a).

2. Dispositif de verrouillage (100, 200) selon la revendication 1, dans lequel le raccord (10) est pourvu d'un second trou traversant (16) pratiqué depuis ladite première surface (11) jusqu'à ladite seconde surface (12) dudit raccord (10), le second trou traversant (16) étant espacé du premier trou traversant (15), l'élément de verrouillage (20) étant pourvu d'une section filetée supplémentaire (21b), et le dispositif de verrouillage (200) comportant en outre un élément de fixation supplémentaire (30b).

3. Dispositif de verrouillage (100, 200) selon l'une quelconque des revendications précédentes, dans lequel l'élément de fixation (30, 30a, 30b) est prévu sous la forme d'une rainure de cisaillement ou d'un boulon de cisaillement.

4. Dispositif de verrouillage (100, 200) selon l'une quelconque des revendications précédentes, dans lequel ledit élément de verrouillage (20) comprend en outre une bride (26).

5. Dispositif de verrouillage (100, 200) selon l'une quelconque des revendications précédentes, dans lequel la section de poignée (22) ne peut pas tourner autour de son propre axe.

6. Dispositif de verrouillage (100, 200) selon l'une quelconque des revendications précédentes, dans lequel ladite section de poignée (22) est apte à maintenir un cadenas.

7. Dispositif de verrouillage (100, 200) selon l'une quelconque des revendications précédentes, comprenant en outre un cadenas.

8. Dispositif de verrouillage (100, 200) selon l'une quelconque des revendications précédentes, dans lequel ledit raccord fait partie intégrante d'un élément parmi un poteau de portail et un portail.

9. Dispositif de verrouillage (100, 200) selon l'une quelconque des revendications précédentes, dans lequel ladite section filetée (21, 21a, 21b) et ladite section de poignée (22) sont enchaînées par une section de liaison (25, 25a, 25b).

10. Dispositif de verrouillage (100, 200) selon l'une quelconque des revendications précédentes, dans lequel ladite section filetée (21, 21a, 21b) a une surface extérieure filetée.

11. Dispositif de verrouillage (100, 200) selon l'une quelconque des revendications précédentes, dans lequel ladite section filetée (21, 21a, 21b) est cylindrique et a une surface intérieure filetée.

12. Dispositif de verrouillage (100, 200) selon l'une quelconque des revendications précédentes, comprenant en outre un élément support (50), ladite section de poignée (22) étant apte à être disposée sur une première face dudit élément support (50), et ledit raccord (10) étant apte à être disposé sur une seconde face dudit élément support, la première face étant disposée à l'opposé de ladite seconde face.

13. Dispositif de verrouillage (100, 200) selon la revendication 12, dans lequel ledit élément support (50) est un élément parmi un poteau de portail (50a) et un portail (50b, 50c, 50d).

14. Dispositif de verrouillage (100, 200) selon l'une quelconque des revendications précédentes, dans lequel au moins le raccord (10) et l'élément de verrouillage (20) sont composés d'acier trempé.

15. Portail (50b, 50c, 50d) comprenant un dispositif de verrouillage (100, 200) selon l'une quelconque des revendications précédentes.
